# EUROPEAN PATENT APPLICATION

(11) **EP 4 141 614 A1**
(43) Date of publication of application: **01.03.2023**
(21) Application number: 22168184.4
(22) Date of filing: 13.04.2022
(51) Int. Cl.: G06F 1/16

(54) **ELECTRONIC DEVICE**

(30) Priority: 23.08.2021 JP 2021135704
(71) Applicant: Dynabook Inc., Koto-ku Tokyo 135-8505 (JP)
(72) Inventor: YUASA, Tomokazu, Tokyo, 135-8505 (JP)
(74) Representative: Henkel & Partner mbB

(57) **Abstract**

According to one embodiment, an electronic device (100) includes a housing (10) formed of an insulator and including an outer surface (111) and a mounting part (30) opened to the outer surface (111), a conductor member (61) provided in the inside (IS) of the housing (10), an installation component (20) formed of an insulator and can be installed into the mounting part (30), and a first connector (51) provided on the inner side of the mounting part (30). The mounting part (30) includes communicating apertures (40) at a position in contact with a gap (C) to be formed between the mounting part (30) and the installation component (20) when the installation component (20) is installed into the mounting part (30) and on the outer surface (111) side with respect to the first connector (51), and the conductor member (61) is exposed to the gap (C) through the communicating aperture (40).

## Description

### FIELD

Embodiments described herein relate generally to an electronic device.

### BACKGROUND

As an example of an electronic device, a portable PC such as a notebook personal computer (notebook PC) called a laptop, mobile personal computer (mobile PC) or the like is known. The electronic device includes a housing having a mounting part, and installation component installed in the mounting part such as a battery pack or the like. Inside the mounting part, for example, a connector connected to a circuit board provided inside the housing is provided.

Outer surfaces of the housing and installation component are covered with, for example, an insulating resin material. When an electrostatic discharge occurs outside the electronic device, there is sometimes a case where static electricity enters the inside of the electronic device from a part between the housing and installation component. The static electricity entering the inside causes damage to the electronic components and the like through the connector and circuit board connected to the connector, and hence there is a possibility of the static electricity becoming a cause of a malfunction and breakage.

### BRIEF DESCRIPTION OF THE DRAWINGS

FIG. 1 is a front view showing an example of an electronic device in a first embodiment.
FIG. 2 is a rear view showing the example of an electronic device in the first embodiment.
FIG. 3 is an exploded perspective view of the electronic device shown in FIG. 1 and FIG. 2.
FIG. 4 is an enlarged perspective view showing a part of a mounting part of a housing shown in FIG. 3.
FIG. 5 is a view for explaining the shield structure inside the housing.
FIG. 6 is a view schematically showing a circuit board shown in FIG. 5.
FIG. 7 is a view schematically showing a conductor member shown in FIG. 5.
FIG. 8 is a partial cross-sectional view including a communicating aperture of the electronic device.
FIG. 9 is a view of the conductor member viewed from the inside of the housing.
FIG. 10 is a view for explaining a pathway of static electricity at the time of occurrence of an electrostatic discharge.
FIG. 11 is a partial cross-sectional view including a communicating aperture of an electronic device in a second embodiment.
FIG. 12 is an enlarge perspective view showing a part of a mounting part of a housing of an electronic device in a third embodiment.

### DETAILED DESCRIPTION

In general, according to one embodiment, an electronic device includes a housing formed of an insulator and including an outer surface and a mounting part opened to the outer surface, a conductor member provided in the inside of the housing, an installation component formed of an insulator and can be installed into the mounting part, and a first connector provided on the inner side of the mounting part. The mounting part includes communicating apertures at a position in contact with a gap to be formed between the mounting part and the installation component when the installation component is installed into the mounting part and on the outer surface side with respect to the first connector, and the conductor member is exposed to the gap through the communicating aperture.

Electronic devices of the embodiments will be described hereinafter with reference to the accompanying drawings. The disclosure is merely an example, and proper changes within the spirit of the invention, which are easily conceivable by a skilled person, are included in the scope of the invention as a matter of course. In addition, in some cases, in order to make the description clearer, the widths, thicknesses, shapes, etc., of the respective parts are schematically illustrated in the drawings, compared to the actual modes. Further, in the specification and drawings, corresponding elements are denoted by like reference numerals, and a detailed description thereof may be omitted unless otherwise necessary.

It should be noted that in the embodiments of the present invention, a first direction X, second direction Y, and third direction Z are defined. Although the first direction X, second direction Y, and third direction Z intersect each other at right angles, these directions may intersect each other at an angle other than 90°. The first direction X is a direction along the vertical direction (longitudinal direction) of the electronic device. The second direction Y is a direction along the lateral direction (width direction) of the electronic device. The third direction Z is a direction along the thickness direction of the electronic device.

Hereinafter, viewing an X-Y plane defined by the first direction X and second direction Y is called planar view, and viewing an X-Z plane defined by the first direction and third direction Z is called cross-sectional view. Further, in some cases, one side of the electronic device in the first direction X is called the "upper part" or "upside", and the other side is called the "lower part" or "downside" with the direction in which the electronic device is viewed from the front side used as the criterion.

### [First Embodiment]

First, an example of the electronic device will be described below. In this embodiment, a mobile PC is disclosed as an example of an electronic device 100. The mobile PC is also called a mobile edge computing device in some cases. Such a mobile PC constitutes a part of a remote support system for realizing, for example, edge computing. The remote support system is a system by which an operator at the rear supports a user, for example, a worker at the job site from the remote place.

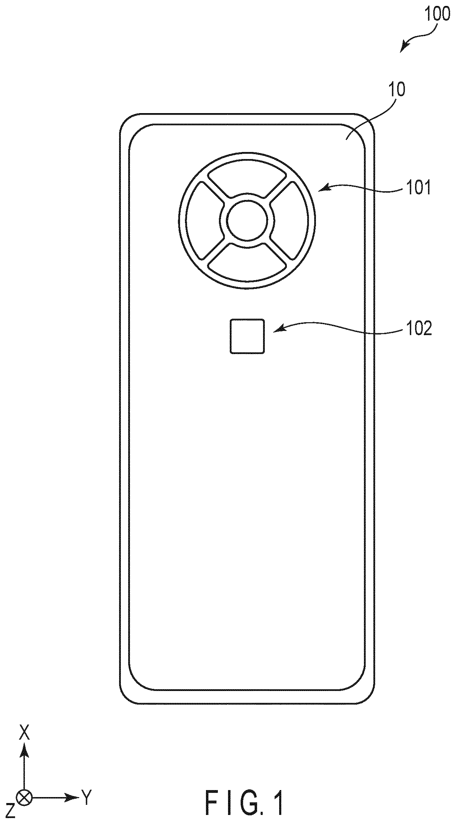

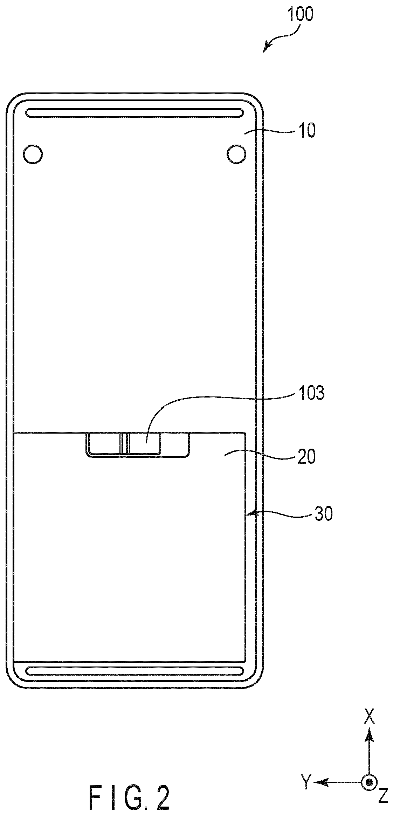

FIG. 1 is a front view showing an example of the electronic device 100 in a first embodiment. FIG. 2 is a rear view showing the example of the electronic device 100 in the first embodiment. The electronic device 100 has an external shape of a flat and approximately rectangular parallelepiped. Here, the shape of an approximately rectangular parallelepiped includes a shape of a rectangular parallelepiped in which various shapes such as roundness, bend, flection, step, irregularity, and the like are added to one of the corner part, ridge line, and surface part. The electronic device 100 has a size that can be held with, for example, one hand. The user of the electronic device 100 holds the electronic device 100 in a vertically long form at the time of use.

As shown in FIG. 1 and FIG. 2, the electronic device 100 includes a housing 10 and installation component which can be installed into a mounting part 30. In this embodiment, as an example of the installation component, a battery pack 20 is disclosed (hereinafter, the installation component is referred to as a battery pack 20). As shown in FIG. 1, on the front side of the electronic device 100, an operating part 101 constituted of a plurality of buttons, and fingerprint sensor 102 are provided. On the rear side of the electronic device 100, a mounting part 30 into which the battery pack 20 is to be installed. In the example shown in FIG. 2, the battery pack 20 is detachably installed in the mounting part 30. When the battery pack 20 is installed in the mounting part 30, outer face of the battery pack 20 is fitting to outer face of the housing.

As shown in FIG. 2, on the mounting part 30, an operating lever 103 for detaching the battery pack 20 is provided in such a manner as to be slidable in the second direction Y and direction opposite to the second direction Y. By operating the lever 103, the user can detach/attach the battery pack 20 from/to the mounting part 30.

Although not shown in FIG. 2, on the upper side face of the electronic device 100, a power switch, power light emitting diode (LED), universal serial bus (USB) 3.0 standard connector, USB type-C standard connector, and the like are provided.

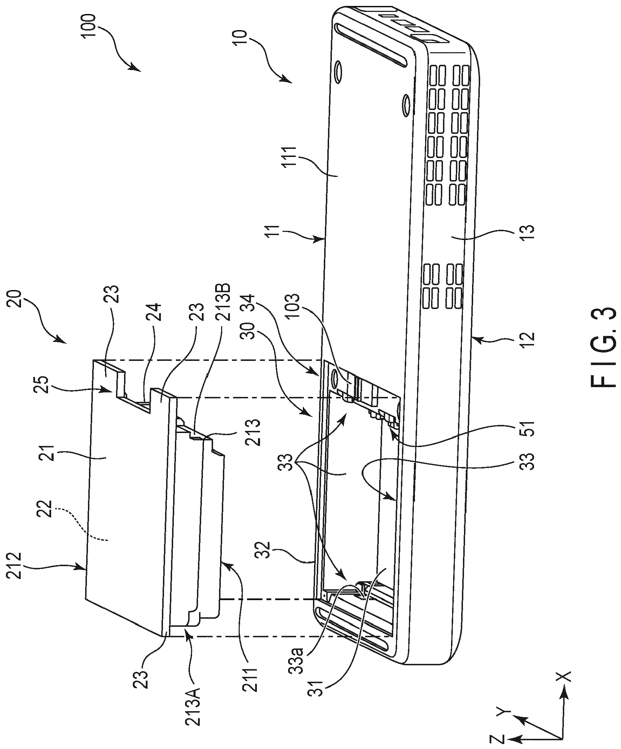

FIG. 3 is an exploded perspective view of the electronic device 100 shown in FIG. 1 and FIG. 2. As described above, the electronic device 100 includes the housing 10 and battery pack 20 installed in the mounting part 30. The housing 10 accommodates therein a circuit board 50 to be described later, and the like. The housing 10 is formed of an insulator. An example of the insulator is a resin material of polycarbonate ABS. Although as other materials, there are fluororesin, polyethylene, polypropylene, and the like, the insulator is not limited to the resin material.

The housing 10 is formed into a shape of an approximately rectangular parallelepiped. The housing 10 includes a wall part 11 having an outer surface 111, wall part 12 opposed to the wall part 11, and sidewall part 13 connecting the wall part 11 and wall part 12 to each other. The wall part 11 constitutes the rear surface of the electronic device 100, wall part 12 constitutes the front surface of the electronic device 100, and sidewall part 13 constitutes the side face of the electronic device 100.

The housing 10 includes a mounting part 30 opened to the outer surface 111. The mounting part 30 is depressed from the outer surface 111 in the direction opposite to the third direction Z. The mounting part 30 is formed on the lower part side of the electronic device 100.

The mounting part 30 is opened in a shape of an approximately rectangle in planar view. The mounting part 30 includes a bottom wall 31, installation open end 32, and inner wall part between the bottom wall 31 and installation open end 32. The inner wall part includes an inner wall 33 extending from the bottom wall 31 in the third direction Z and step part 34 formed between the inner wall 33 and installation open end 32. As an example, the bottom wall 31 is constituted of the wall part 12, and installation open end 32 and inner wall part are constituted of the wall part 11 and sidewall part 13.

The mounting part 30 includes a lever 103 at the step part 34 on one side thereof in the first direction X. On the inner wall 33 (sidewall 331 to be described later) on one side of the mounting part 30 in the first direction X, a first connector 51 is provided to be directed toward the inner space surrounded by the inner wall part. The first connector 51 is, as an example, a male connector and includes connecting terminals connected to a second connector 24 to be described later and including conductors. The mounting part 30 includes a concave part 33a for positioning the battery pack 20 to the mounting part 30 in the inner wall 33 on the other side thereof in the first direction X. Although not shown, two concave parts 33a are formed in the second direction Y.

The battery pack 20 is a power source of the electronic device 100. The battery pack 20 includes a battery case 21, battery cells 22 accommodated in the battery case 21, and second connector 24 electrically connected to the battery cells 22. Inside the battery case 21, a space for accommodating the battery cells 22 is formed. The battery pack 20 includes at least one (for example, two) battery cell 22. The battery cell 22 is, for example, a secondary cell.

The battery case 21 is formed of an insulator material of a kind identical to, for example, the housing 10. From another point of view, the battery pack 20 is covered with an insulator. The battery case 21 is formed into a shape of an approximately rectangular parallelepiped. The battery case 21 includes a principal surface 211, principal surface 212 on the opposite side of the principal surface 211 in the third direction Z, peripheral surface 213 extending from the principal surface 211 in the third direction Z, and flange part 23 protruding from the peripheral surface 213.

The flange part 23 protrudes from the peripheral surface 213 in the first direction X, direction opposite to the first direction X, second direction Y, and direction opposite to the second direction Y. The second connector 24 is, as an example, a female connector, and includes connecting terminals connected to the first connector 51 and including conductors.

In an installed state where the battery pack 20 is installed in the mounting part 30, the principal surface 211 is opposed to the bottom wall 31, peripheral surface 213 is opposed to the inner wall 33, and flange part 23 overlaps the step part 34 in the third direction Z. The peripheral surface 213 includes, in the battery-installed state, a side face 213A opposed to the part of the inner wall 33 provided with the concave part 33a, and side face 213B opposed to the part of the inner wall 33 provided with the first connector 51.

The side face 213A is provided with a hook (not shown) to be engaged with the concave part 33a. The side face 213B is provided with the second connector 24. The flange part 23 is provided with, on one side thereof in the first direction X, a cutout part 25 for not hindering the lever 103 in the movement thereof in the battery-installed state.

When installing the battery pack 20 into the mounting part 30, the user directs the battery pack 20 toward the installation open end 32 for insertion thereof into the mounting part 30. At this time, the user can position the battery pack 20 to the mounting part 30 by inserting the hook of the battery case 21 into concave part 33a of the inner wall 33. Furthermore, the user thrusts the battery pack 20 at the principal surface 212 into the mounting part 30 in the direction opposite to the third direction Z in such a manner as to bring the principal surface 211 close to the bottom wall 31.

Thereby, the battery pack 20 is installed into the mounting part 30. At this time, the second connector 24 is electrically connected to the first connector 51. The principal surface 212 is positioned flush with the outer surface 111 in the first direction X, and constitutes the rear surface of the electronic device 100 together with the outer surface 111.

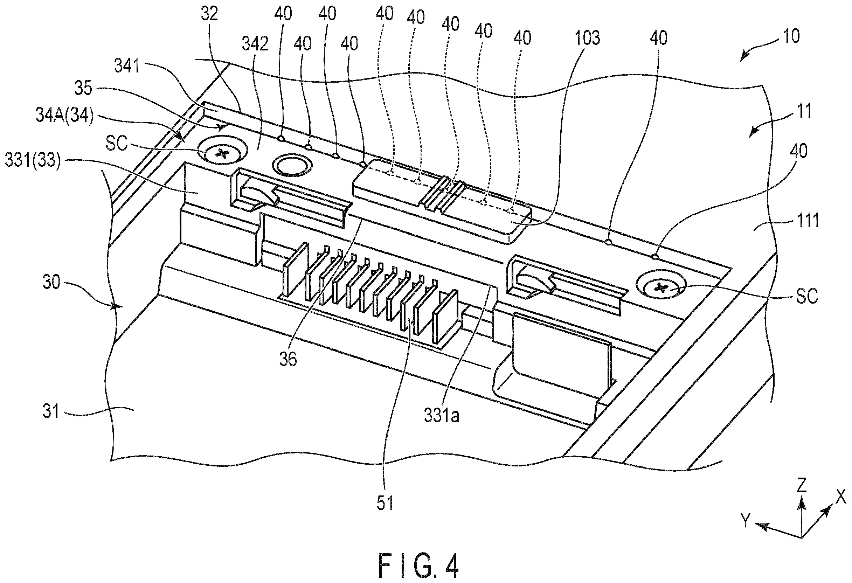

FIG. 4 is an enlarged perspective view showing a part of the mounting part 30 of the housing 10 shown in FIG. 3. In FIG. 4, of the parts inside the mounting part 30, the part at which the first connector 51 is provided is mainly enlarged. As described above, the mounting part 30 includes the bottom wall 31, installation open end 32, inner wall 33, and step part 34. Furthermore, the mounting part 30 includes communicating apertures 40 formed in the step part 34. The communicating apertures 40 are formed in the wall part 11 constituting the inner wall part.

The inner wall 33 includes the sidewall 331 on one side thereof in the first direction X. The sidewall 331 is connected to the step part 34, and is positioned between the bottom wall 31 and step part 34. The first connector 51 outwardly protrudes from an opening 331a provided in the sidewall 331 toward the inner side space of the mounting part 30.

Next, of the portions of the step part 34, a step part 34A connected to the sidewall 331 will mainly be described. The step part 34A includes a first step face 341 extending from the installation open end 32 formed on the outer surface 111, second step face 342 extending in the direction intersecting the first step face 341, corner part 35 formed between the first step face 341 and second step face 342, and corner part 36 formed between the second step face 342 and sidewall 331. In the example shown in FIG. 4, the corner part 35 is formed between the first step face 341 and second step face 342 in such a manner as to have an angle of approximately 90°. In planar view, the opening including the corner part 36 is smaller than the opening formed by the installation open end 32.

As shown in FIG. 4, the first step face 341 extends in the direction opposite to the third direction Z from the installation open end 32 and in the second direction Y. The second step face 342 extends in the direction opposite to the first direction X from the first step face 341 and in the second direction Y. At the central part of the second step face 342, the lever 103 is provided. In the second step face 342, securing members SC to be described later are provided. As shown in FIG. 4, the corner part 35 extends in the second direction Y. Here, the corner part 35 includes not only the part at which the first step face 341 and second step face 342 are connected to each other but also the first step face 341 and second step face 342 in the vicinity of the above part of connection.

The communicating apertures 40 make the space inside the mounting part 30 and inside IS of the housing 10 to be described later communicate with each other. Each of the communicating apertures 40 includes an opening formed in the step part 34, portion from the opening to a part communicating with the inside IS, and the like. In the corner part 35, the plurality of communicating apertures 40 are formed. The communicating apertures 40 may be arranged in a line at regular intervals in the second direction Y or may be arranged at irregular intervals.

Each of the communicating apertures 40 may be circular when viewed from the mounting part 30 side or may be rectangular. As another example, each of the communicating apertures 40 may have a long and thin shape in the second direction Y or may have a shape extending along the first step face 341 and second step face 342.

As shown in FIG. 4, the communicating apertures 40 are also formed at positions hidden behind the lever 103. The positions hidden behind the lever 103 include positions to be hidden behind the lever 103 within the range of the slide of the lever 103 in the second direction Y and direction opposite to the second direction Y.

Next, positions of the communication holes 40 and first connector 51 in the mounting part 30 will be described. In the third direction Z, the communicating apertures 40 are positioned on the outer surface 111 side with respect to the first connector 51. The distance from the installation open end 32 to the communicating aperture 40 along the surface of the mounting part 30 is less than the distance from the installation open end 32 to the first connector 51 along the surface of the mounting part 30.

More specifically, on one side of the first direction X, the distance from the installation open end 32 to the communicating aperture 40 along the first step face 341 is less than the distance from the installation open end 32 to the first connector 51 along the first step face 341, corner part 35, second step face 342, corner part 36, and sidewall 331.

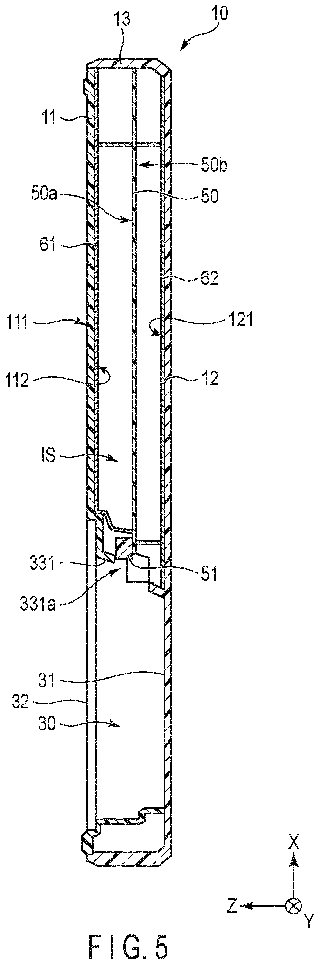

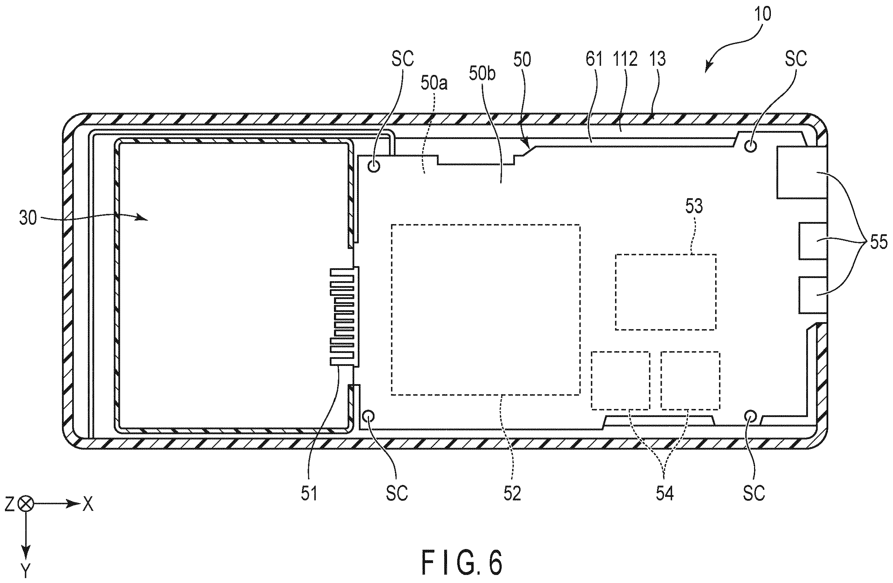

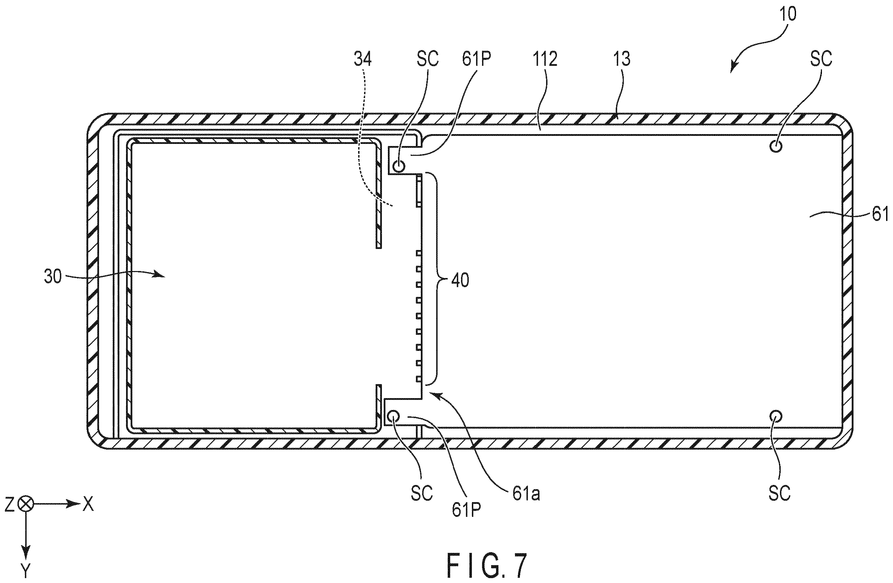

FIG. 5 is a view for explaining the shield structure of the inside IS of the housing 10. FIG. 6 is a view schematically showing a circuit board 50 shown in FIG. 5. FIG. 7 is a view schematically showing a conductor member 61 shown in FIG. 5. In FIG. 5, positional relationships between the circuit board 50, conductor member 61, and frame ground 62 in the inside IS of the housing 10 are schematically shown. In FIG. 6 and FIG. 7, the circuit board 50 and conductor member 61 are respectively viewed from the third direction Z. In each of FIGS. 5 to 7, the illustration of the battery pack 20 and the like is partially omitted.

As shown in FIG. 5, in the inside IS of the housing 10, the circuit board 50 to which the first connector 51 is connected, conductor member 61, and frame ground 62 are provided. In the third direction Z, the circuit board 50 is positioned between the conductor member 61 and frame ground 62. The conductor member 61 and frame ground 62 are mainly provided in the range within which the member 61 and ground 62 overlap the circuit board 50 in the third direction Z. As described above by using FIG. 4, the first connector 51 protrudes from the inside IS into the mounting part 30 through the opening 331a of the sidewall 331.

The circuit board 50 is, for example, a printed circuit board. The circuit board 50 is provided in the first direction X at the central part of the inside of the housing 10 in the third direction Z. The circuit board 50 is fixed in the inside IS by means of securing members SC (for example, four). The securing member SC is, as an example, a screw made of metal and nut made of metal fastened onto the screw, and the like. The screw is inserted from, for example, the wall part 11 side. The securing member SC fulfills not only a role of physically fixing the circuit board 50 to the housing 10 but also a role of electrically connecting the circuit board 50, conductor member 61, and frame ground 62 to each other.

In the example shown in FIG. 6, on the circuit board 50, a power supply circuit 52, CPU 53, memory 54, and USB connector 55 are mounted. The USB connector 55 is, for example, the aforementioned USB 3.0 standard connector, and USB type-C standard connector. On the circuit board 50, a storage device such as a solid state drive (SSD) or the like is mounted in addition to the above-mentioned electronic components. The power supply circuit 52, CPU 53, memory 54, and USB connector 55 are examples of the electronic component. The electronic components such as the power supply circuit 52 or the like mounted on the circuit board 50 may possibly become a generation source of electromagnetic waves.

The circuit board 50 includes a surface 50a on one side in the third direction Z, and surface 50b on the other side in the third direction Z. As shown in FIG. 5, the surface 50a is covered with the conductor member 61 which is a shield member, and surface 50b is covered with the frame ground 62.

The conductor member 61 is an example a shield member (EMC shield) configured to shield the electromagnetic waves radiated from the electronic components mounted on the circuit board 50. The conductor member 61 is electrically connected to the frame ground 62 through the securing members SC and circuit board 50. The conductor member 61 is formed of a conductor.

The conductor member 61 is, as an example, a conductive tape such as an aluminum tape or the like. As materials for the conductor member 61 other than aluminum, there are, for example, copper foil, silver, gold, nickel, iron, and the like. The conductor member 61 may also be formed of, for example, sheet metal, metallic sputtering, conductive coating, and the like in addition to the conductive tape.

The aluminum tape serving as the conductor member 61 is stuck on the inner surface 112 on the opposite side of the outer surface 111 in the first direction X and second direction Y. It should be noted that the range of the inner surface 112 within which the conductor member 61 is to be provided can be determined according to the positions of the electronic components mounted on the circuit board 50 or position or the like of an antenna arranged in the inside IS.

As shown in FIG. 7, the conductor member 61 includes an end part 61a on the mounting part 30 side in the first direction X and a pair of extension parts 61P extending from the end part 61a. The pair of extension parts 61P extends toward, for example, parts at which the securing members SC and circuit board 50 are connected to each other.

The end part 61a is positioned in the vicinity of the communicating apertures 40 in the first direction X. The end part 61a is formed along the communicating apertures 40. The length of the end part 61a in the second direction Y is longer than the line of the communicating apertures 40 provided in the second direction Y. In the second direction Y, the communicating apertures 40 are positioned between the pair of extension parts 61P.

The frame ground 62 is connected to the ground potential of the electronic device 100. The frame ground 62 is formed of a conductor. As the material for the frame ground 62, there are, for example, aluminum, copper foil, silver, gold, nickel, iron, and the like. The frame ground 62 is formed of, for example, a conductive tape, sheet metal, metallic sputtering, conductive coating, and the like. The frame ground 62 is provided in the first direction X and second direction Y on an inner surface 121 of the wall part 12 opposed to the inner surface 112.

The electromagnetic waves radiated from the electronic components mounted on the circuit board 50 are shielded by the conductor member 61 and frame ground 62 at the part of the circuit board 50 covered with the conductor member 61 and frame ground 62. Owing to such shielding, the influence of the electromagnetic waves radiated from, for example, the electronic components exerted on the antenna performance of the antenna (not shown) is suppressed.

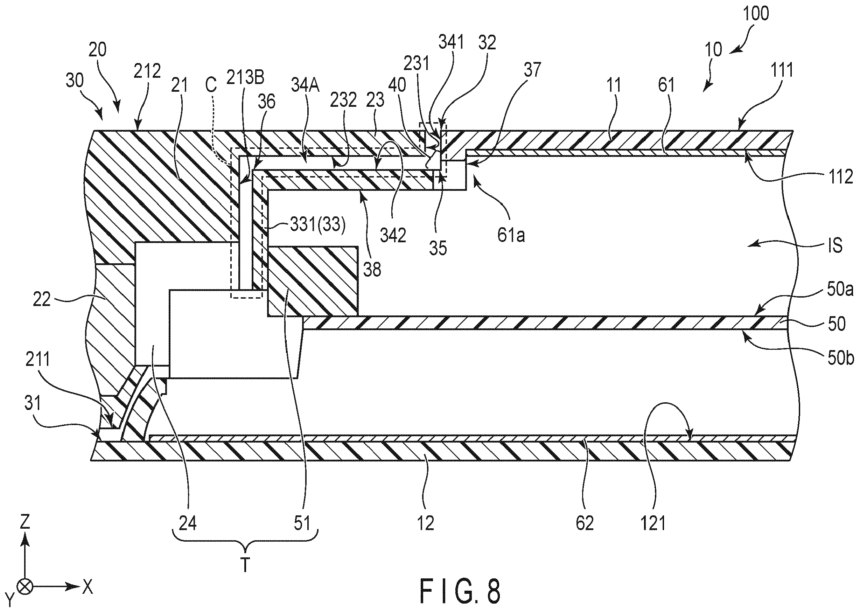

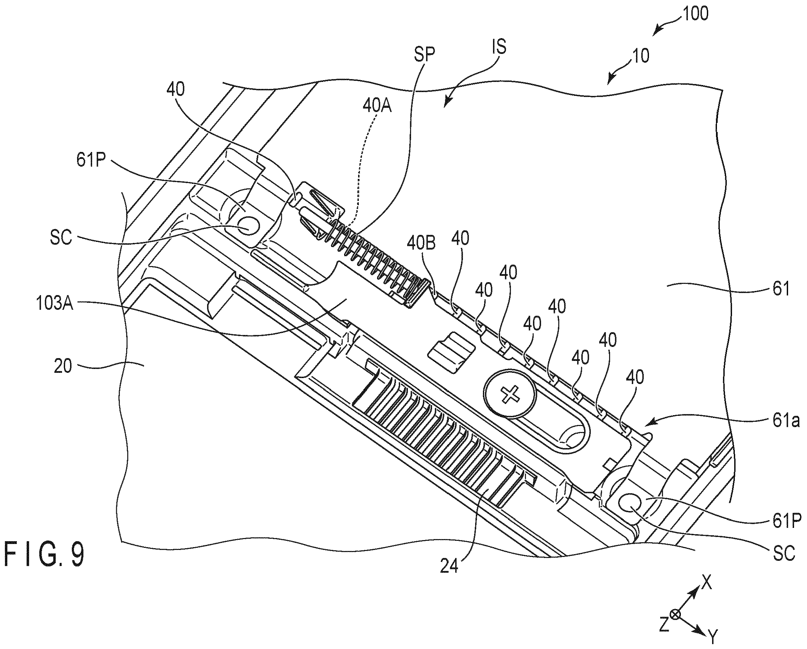

FIG. 8 is a partial cross-sectional view including the communicating aperture 40 of the electronic device 100. FIG. 9 is a view of the conductor member 61 viewed from the inside IS of the housing 10. In FIG. 8, of the parts of the mounting part 30, the part at which the first connector 51 is provided is mainly shown. In FIG. 9, the vicinity of the end part 61a of the conductor member 61 is mainly shown. In the cross-sectional views of FIG. 8 and subsequent figures, the illustration of the lever 103 and the like is partially omitted.

As described above, the battery pack 20 is installed in the mounting part 30. In this state, the principal surface 211 is opposed to the bottom wall 31, side face 213B is opposed to the sidewall 331, and flange part 23 overlaps the step part 34A in the third direction Z. The second connector 24 is electrically connected to the first connector 51. Hereinafter, the first connector 51 and second connector 24 are collectively called the "connector part T".

As described above, the step part 34A includes the first step face 341, second step face 342, corner part 35, corner part 36, and communicating apertures 40. At the part in which the flange part 23 overlaps the step part 34A in the third direction Z, the flange part 23 includes a third step face 231 opposed to the first step face 341, and fourth step face 232 opposed to the second step face 342. The third step face 231 extends in the third direction Z and second direction Y. The fourth step face 232 extends in the first direction X and second direction Y.

Between the mounting part 30 and battery pack 20, a gap C continuous with the outer surface 111 and principal surface 212 is formed. The gap C is formed between the exterior portion (outer surface 111 side and principal surface 212 side) of the housing 10 and connector part T. In FIG. 8, the gap C is surrounded by a broken line to thereby be pointed out. The gap C can possibly become the entry pathway of the static electricity occurring outside the housing 10. Here, the gap C includes a minute gap through which the static electricity can make an entry from outside. It should be noted that for the sake of convenience of explanation, in FIG. 8 and subsequent figures, the communicating hole 40 and gap C are schematically shown by enlarging more exaggeratedly than in reality.

Between the mounting part 30 and battery pack 20 in the battery-installed state, the gap C is formed, as shown in FIG. 8, along the mounting part 30 and battery case 21 of the battery pack 20. More specifically, the gap C includes gaps respectively formed between the first step face 341 and third step face 231, between the second step face 342 and fourth step face 232, and between the side face 213B and sidewall 331.

The gap C is, in cross-sectional view, formed in such a manner as to bend sharply in a staircase pattern. Although in the example shown in FIG. 8, the gap C bends at an angle of approximately 90°, the gap C may bend at an angle greater than 90° or may bend at an angle less than 90°.

The communicating aperture 40 makes the gap C and inside IS of the housing 10 communicate with each other. As described above, the communicating aperture 40 is formed at the corner part 35, and hence the communicating aperture 40 is formed halfway through the entry pathway of the static electricity from the outside of the housing 10 to the connector part T. It is desirable that the communicating aperture 40 be formed halfway through the pathway to the connector part T which is the component to which static electricity is never desired to be discharged.

The wall part 11 includes an inner face 37 on the opposite side of the first step face 341 in the first direction X, and inner face 38 on the opposite side of the second step face 342 in the third direction Z. The inner face 37 is connected to the inner surface 112 and inner face 38 is connected to the inner face 37. As shown in FIG. 9, the communicating aperture 40 is formed in the wall part 11 in a groove-like shape when viewed from the inside IS.

The communicating aperture 40 penetrates the portions between the first step face 341 and second step face 342, and between the inner face 37 and inner face 38. The end part 61a is positioned in the vicinity of the inner face 37 along the second direction Y. As shown in FIG. 9, the pair of extension parts 61P extends toward the positions at which the securing members SC and circuit board 50 are connected to each other.

As shown in FIG. 8, the communicating aperture 40 is in contact with the gap C. At the position at which the communicating aperture 40 is formed, the wall part 11 formed of the insulator is not positioned to be extended from the gap C toward the inside IS. From another point of view, it can be said that the conductor member 61 is exposed to the gap C through the communicating aperture 40.

As shown in FIG. 9, on the opposite side of the step part 34A, a main body part 103A connected to the lever 103 is provided. The main body part 103A is provided with a metallic coil spring SP in the second direction Y. A part (for example, communicating aperture 40A and communicating aperture 40B) of the communicating apertures 40 are positioned not only along the end part 61a, but also in the vicinity of the coil spring SP.

Next, positions of the communicating apertures 40, connector part T, and conductor member 61 will be described. The communicating apertures 40 are positioned on the outer surface 111 side with respect to the connector part T. As described above, the end part 61a of the conductor member 61 is positioned in the vicinity of the communicating apertures 40. When the distance from the communicating apertures 40 to the connector part T and distance from the communicating apertures 40 to the end part 61a are compared with each other, the distance from the communicating apertures 40 to the end part 61a of the conductor member 61 is less than the distance from the communicating apertures 40 to connector part T. More specifically, the distance from the communicating apertures 40 to the end part 61a in the first direction X is less than the distance from the communicating apertures 40 to the connector part T along the second step face 342, corner part 36, and sidewall 331.

When the distance from the communicating apertures 40 to the surface 50a of the circuit board 50, and distance from the communicating apertures 40 to the end part 61a are compared with each other, the distance from the communicating apertures 40 to the end part 61a of the conductor member 61 is less than the distance from the communicating apertures 40 to the surface 50a. More specifically, the distance from the communicating apertures 40 to the end part 61a in the first direction X is less than the distance from the communicating apertures 40 to the circuit board 50 in the third direction Z.

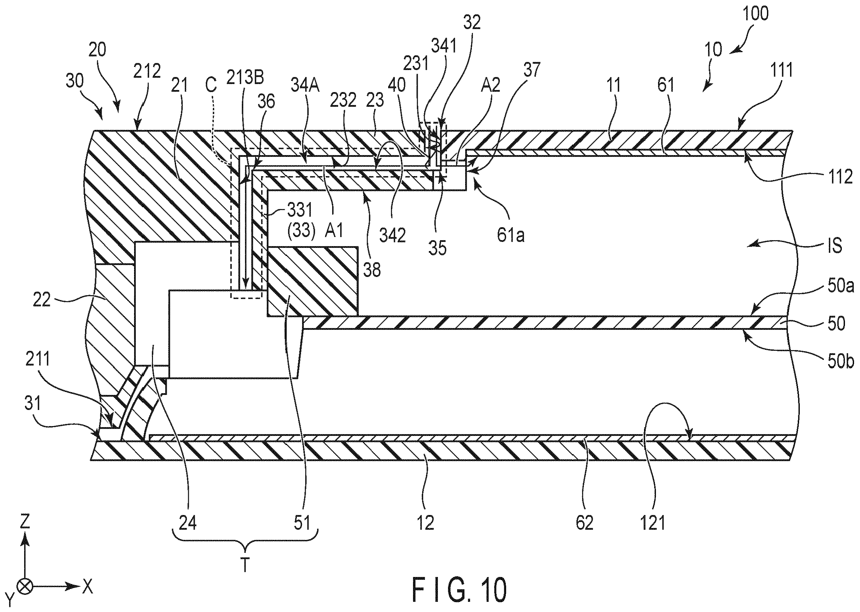

FIG. 10 is a view for explaining a pathway of static electricity at the time of occurrence of an electrostatic discharge. In the electronic device 100, for example, when detaching the battery pack 20 from the mounting part 30 of the housing 10, the user operates the lever 103 with a finger of the user. If the finger of the user is charged with static electricity, when the user brings the user's finger close to the lever 103 in order to operate the lever 103, an electrostatic discharge occurs between the finger and electronic device 100.

Between the battery pack 20 and mounting part 30, the gap C is formed. The housing 10 and battery case 21 of the battery pack 20 are formed of an insulator. Accordingly, when an electrostatic discharge occurs at the outer surface 111, principal surface 212, and in the vicinity of these surfaces, there is sometimes a case where the static electricity enters the electronic device 100 from outside the device 100 along the gap C. From another point of view, the entry pathway of the static electricity is limited to the gap C.

The arrow A1 shown in FIG. 10 indicates an example of the entry pathway of the static electricity of a case where the communicating apertures 40 are not formed in the mounting part 30. The arrow A2 shown in FIG. 10 indicates an example of the entry pathway of the static electricity of a case where the communicating apertures 40 are formed in the mounting part 30.

As indicated by the arrow A1, when the communicating apertures 40 are not formed, the static electricity reaches the connecting terminals of the connector part T which are the conductors closest to the outside through the gap C. Accordingly, the static electricity causes damage to the electronic components and the like through the connector part T and circuit board 50 connected to the first connector 51, and hence there is a possibility of the static electricity becoming a cause of a malfunction and breakage of the electronic device 100.

As described above, the communicating aperture 40 is formed halfway through the entry pathway of the static electricity from the outside of the housing 10 to the connector part T. The communicating aperture 40 functions as a part of the pathway of the static electricity. The communicating aperture 40 is formed at such a position that the distance from the communicating aperture 40 to the end part 61a becomes less than the distance from the communicating aperture 40 to the connector part T along the second step face 342, corner part 36, and sidewall 331. Accordingly, when the communicating apertures 40 are formed, the static electricity reaching the corner part 35 is discharged to the end part 61a from the gap C through the communicating aperture 40. Accordingly, the static electricity hardly reaches the connector part T.

As described above by using FIG. 9, in the vicinity of a part of the communicating apertures 40, the coil spring SP is positioned. Part of the static electricity entering the inside from the gap C reaches the coil spring SP through the communicating apertures 40. Furthermore, in addition to the coil spring SP, the securing members SC or the like positioned in the vicinities of the communicating apertures 40 in the inside IS of the housing 10 functions as lightning rods to which the static electricity is discharged.

When the distance from the communicating apertures 40 to the surface 50a of the circuit board 50 and distance from the communicating apertures 40 to the end part 61a are compared with each other, the distance from the communicating apertures 40 to the end part 61a is less than the distance from the communicating apertures 40 to the surface 50a. Accordingly, the static electricity entering the inside IS from the communicating aperture 40 reaches the end part 61a and hardly reaches the surface 50a of the circuit board 50.

In the mounting part 30 of the electronic device 100 in this embodiment, each of the communicating apertures 40 is formed at a position in contact with the gap C and on the outer surface 111 side with respect to the connector part T. Inside the housing 10, the end part 61a of the conductor member 61 is provided at a position exposed to the gap C through the communicating aperture 40. Furthermore, the communicating aperture 40 is formed at such a position that the distance from the communicating aperture 40 to the end part 61a becomes less than the distance from the communicating aperture 40 to the connector part T along the second step face 342, corner part 36, and sidewall 331. Thereby, the static electricity entering the gap C from outside is discharged to the end part 61a of the conductor member 61 through the communicating aperture 40. Accordingly, the static electricity entering from the gap C hardly reaches the connector part T.

Furthermore, the distance from the communicating aperture 40 to the end part 61a is less than the distance from the communicating aperture 40 to the surface 50a. Accordingly, the static electricity entering the inside IS from the communicating aperture 40 is discharged to the end part 61a, and hence hardly reaches the surface 50a of the circuit board 50.

Furthermore, the conductor member 61 is electrically connected to the frame ground 62 connected to the ground potential. Accordingly, the static electricity reaching the conductor member 61 is made to escape to the ground through the frame ground 62.

That is, the static electricity hardly reaches the connector part T and circuit board 50, and hence damage is hardly caused to the electronic components mounted on the circuit board 50 through the circuit board 50 connected to the first connector 51 and battery cells 22 and the like connected to the second connector 24. As long as the electronic device 100 in this embodiment is concerned, when the static electricity enters the gap C, it is possible to suppress the adverse influence of the static electricity on the electronic components, and reduce the risk of a malfunction and breakage of the electronic device 100.

In the inside IS of the housing 10, the conductor member 61 and frame ground 62 are provided so as to cover the circuit board 50, and hence it is possible for the conductor member 61 and frame ground 62 to shield the electromagnetic waves radiated from the electronic components mounted on the circuit board 50. As described above, the static electricity entering the gap C is discharged to the conductor member 61, and hence the conductor member 61 functions not only as a shield member against the electromagnetic waves but also as a lightning rod to which the static electricity is discharged.

The static electricity enters the inside along the gap C, and hence it is possible to limit the entry pathway of the static electricity by the shape of the gap C. The gap C is formed by the mounting part 30 of the housing 10 formed of the insulator and battery case 21 formed of the insulator in such a manner as to bend sharply in a staircase pattern, and hence the static electricity is prevented from linearly reaching the connector part T from outside.

Furthermore, on the entry pathway of the static electricity, the communicating apertures 40 are formed at the corner part 35 of the step part 34. The static electricity entering the gap C is discharged to the conductor member 61 from the communicating aperture 40 before reaching the connector part T, and hence the static electricity hardly reaches the connector part T.

Furthermore, the plurality of communicating apertures 40 are formed at the corner part 35 in the second direction Y. The communicating apertures are provided at the corner part 35 and also at positions hidden behind the lever 103. Accordingly, when the finger operating the lever 103 is charged with static electricity, even if an electrostatic discharge occurs, the static electricity hardly reaches the connector part T. The communicating apertures 40 are also provided at positions other than the positions hidden behind the lever 103, and hence when the portion other than the finger operating the lever 103 is charged with static electricity, even if an electrostatic discharge occurs, the static electricity hardly reaches the connector part T.

According to the first embodiment described above, it is possible to provide an electronic device 100 capable of improving the reliability. That is, when an electrostatic discharge occurs, the static electricity entering the gap C is discharged to the conductor member 61 in the inside IS through the communicating aperture 40, whereby the static electricity hardly reaches the connector part T and circuit board 50. Occurrence of a malfunction and breakage of the electronic device 100 to be caused by the static electricity flowing through the gap C is suppressed, and hence it is possible to improve the reliability of the electronic device 100.

Further, as long as the electronic device 100 is concerned, there is no need to provide countermeasures against static electricity outside the housing 10, and hence the external appearance of the electronic device 100 is hardly impaired. As long as the electronic device 100 in the first embodiment is concerned, it is possible to realize compatibility of improvement in the reliability of the electronic device 100 with improvement in the external appearance quality.

### [Second Embodiment]

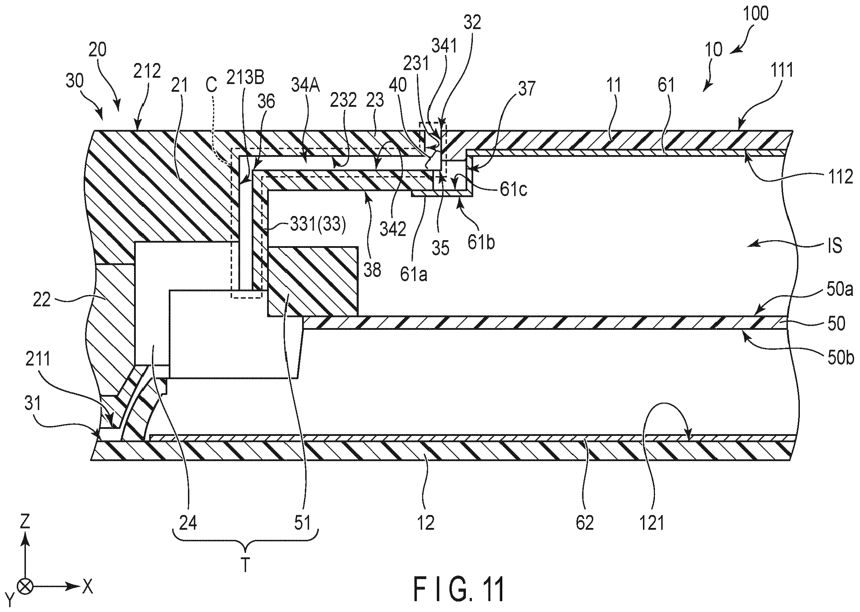

Next, a second embodiment will be described. Constituent elements identical to the first embodiment are denoted by reference symbols identical to the first embodiment and descriptions of the elements are appropriately omitted. FIG. 11 is a partial cross-sectional view including a communicating aperture 40 of an electronic device 100 in the second embodiment. In the electronic device 100 of the second embodiment, the position of the conductor member 61 relative to the communicating aperture 40 differs from the position of the conductor member 61 of the electronic device 100 of the first embodiment.

The end part 61a of the conductor member 61 is positioned between the communicating aperture 40 and circuit board 50 in the third direction Z. In the conductor member 61, the length thereof in the first direction X is longer as compared with, for example, the first embodiment. The conductor member 61 includes a face 61b opposed to the face 50a of the circuit board 50 and face 61c on the opposite side of the face 61b. The communicating aperture 40 is opposed to the conductor member 61 serving as a shield member from the opposite side of the circuit board 50. More specifically, the communicating aperture 40 is opposed to the face 61c in the third direction Z.

In the configuration of the electronic device 100 of the second embodiment too, advantageous effects identical to the first embodiment can be obtained. Furthermore, in the electronic device 100 of the second embodiment, the communicating aperture 40 is opposed to the face 61c in the third direction Z. Accordingly, the static electricity entering the inside through the communicating aperture 40 more hardly reaches the circuit board 50. Thereby, the circuit board 50 and electronic components mounted on the circuit board 50 are protected from an electrostatic discharge.

### [Third Embodiment]

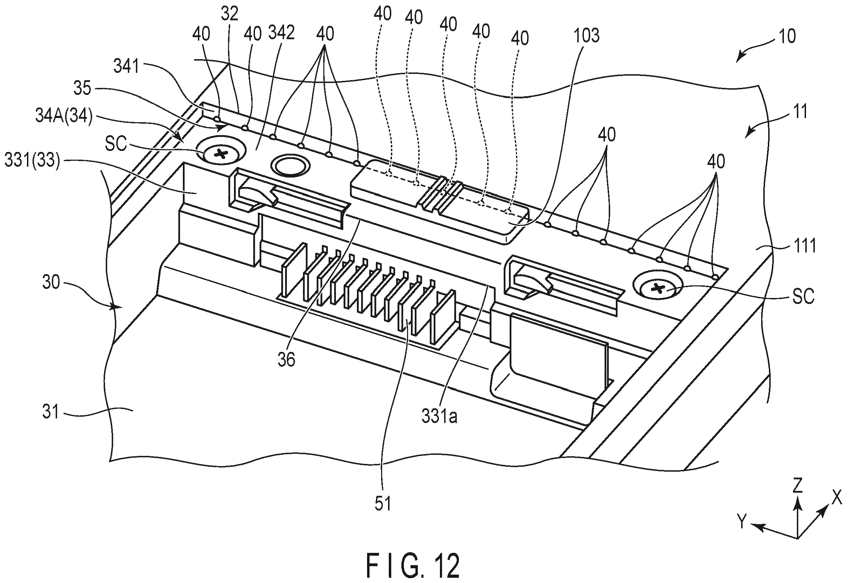

Next, a third embodiment will be described. Constituent elements identical to the embodiments described above are denoted by reference symbols identical to the above embodiments and descriptions of the elements are appropriately omitted. FIG. 12 is an enlarged perspective view showing a part of a mounting part 30 of a housing 10 of an electronic device 100 in the third embodiment. The third embodiment differs from the embodiments described above in the range within which communicating apertures 40 are formed at the corner part 35. As shown in FIG. 12, the communicating apertures 40 are formed in a wider range than the electronic device 100 of the first embodiment described by using FIG. 4 at regular intervals.

In the configuration of the electronic device 100 of the third embodiment too, advantageous effects identical to the embodiments described above can be obtained. Furthermore, in the electronic device 100 of the third embodiment, the communicating apertures 40 are formed in the whole span of the corner part 35, and thus a large number of pathways of static electricity are formed from the gap C to the conductor member 61. Accordingly, the entering static electricity is liable to be discharged to the conductor member 61 through the communicating aperture 40 and static electricity hardly reaches the connector part T. Thereby, the electronic device 100 is protected from an electrostatic discharge. The configuration of the electronic device 100 of the third embodiment can also be applied to the embodiments described above.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

It should be noted that the communicating apertures 40 may be formed in one of the first step face 341 and second step face 342 or may be formed in both the first step face 341 and second step face 342 in addition to the corner part 35. Furthermore, the communicating apertures 40 may also be formed in different shapes according to the positions of the communicating apertures 40 on the step part 34A. It should be noted that when the distance from the communicating aperture 40 to the end part 61a is less than the distance from the communicating aperture 40 to the surface 50a, the end part 61a may be provided separate from the inner face 37 in the first direction X.

According to a first aspect of the present embodiment, an electronic device comprises a housing formed of an insulator and including an outer surface and a mounting part opened to the outer surface; a conductor member provided in the inside of the housing; an installation component formed of an insulator and can be installed into the mounting part; and a first connector provided on the inner side of the mounting part, wherein the mounting part includes communicating apertures at a position in contact with a gap to be formed between the mounting part and the installation component when the installation component is installed into the mounting part and on the outer surface side with respect to the first connector, and the conductor member is exposed to the gap through the communicating aperture.

According to a second aspect of the present embodiment, in the electronic device of the first aspect of the present embodiment, a distance from the communicating aperture to the conductor member is less than a distance from the communicating aperture to the first connector.

According to a third aspect of the present embodiment, the electronic device of the second aspect of the present embodiment further comprises a frame ground formed of a conductor in the inside, wherein the conductor member is electrically connected to the frame ground.

According to a fourth aspect of the present embodiment, the electronic device of the third aspect of the present embodiment further comprises a circuit board connected to the first connector in the inside, wherein the conductor member is a shield member which shields electromagnetic waves radiated from electronic components mounted on the circuit board, and one surface of the circuit board is covered with the shield member, and the other surface of the circuit board is covered with the frame ground.

According to a fifth aspect of the present embodiment, in the electronic device of the fourth aspect of the present embodiment, the communicating aperture is opposed to the shield member from the opposite side of the circuit board.

According to a sixth aspect of the present embodiment, in the electronic device of any one of the first aspect to the fifth aspect, the mounting part includes a step part including a first step face extending from the outer surface and a second step face extending in a direction intersecting the first step face, the installation component includes a flange part including a third step face opposed to the first step face and fourth step face opposed to the second step face, and the gap includes a gap formed between the first step face and the third step face and between the second step face and the fourth step face.

According to a seventh aspect of the present embodiment, in the electronic device of sixth aspect of the present embodiment, the communicating apertures are formed at a corner part formed between the first step face and the second step face.

According to an eighth aspect of the present embodiment, in the electronic device of the seventh aspect of the present embodiment, the communicating apertures are formed in plural numbers along the corner part.

According to a ninth aspect of the present embodiment, in the electronic device of the seventh aspect and the eighth aspect of the present embodiments, the mounting part further includes a sidewall connected to the step part, and the first connector is provided in the sidewall.

According to a tenth aspect of the present embodiment, in the electronic device of the first aspect of the present embodiment, the installation component further includes a second connector connected to the first connector, and the communicating apertures are positioned on the outer surface side with respect to the second connector.

It should be noted that although in this embodiment, the mobile PC has been disclosed as an example of the electronic device 100, this embodiment can also be applied to electronic devices other than the mobile PC. This embodiment can also be applied to a notebook PC having an opening part for memory expansion. The notebook PC includes a housing including an opening part for memory expansion, and cover detachably attached to the opening part. The opening part is an example of the mounting part 30, and cover is an example of an installation component. Inside the housing, memory expansion slots are positioned in the vicinity of the opening part.

The aforementioned communicating apertures are formed in the opening part by application of the configuration of each of the embodiments of the present invention, whereby it is possible to protect the memory expansion slots, slot-mounted circuit board, and the like from an electrostatic discharge. As other examples of the installation component, there are a disk device such as a hard disk drive or the like, and optical drive or the like.

## Claims

1. An electronic device (100) **characterized by** comprising:
a housing (10) formed of an insulator and including an outer surface (111) and a mounting part (30) opened to the outer surface (111);
a conductor member (61) provided in the inside (IS) of the housing (10);
an installation component (20) formed of an insulator and can be installed into the mounting part (30); and
a first connector (51) provided on the inner side of the mounting part (30), wherein
the mounting part (30) includes communicating apertures (40) at a position in contact with a gap (C) to be formed between the mounting part (30) and the installation component (20) when the installation component (20) is installed into the mounting part (30) and on the outer surface (111) side with respect to the first connector (51), and
the conductor member (61) is exposed to the gap (C) through the communicating aperture (40).

2. The electronic device (100) of claim 1, **characterized in that**
a distance from the communicating aperture (40) to the conductor member (61) is less than a distance from the communicating aperture (40) to the first connector (51) .

3. The electronic device (100) of claim 2, **characterized by** further comprising a frame ground (62) formed of a conductor in the inside (IS), wherein
the conductor member (61) is electrically connected to the frame ground (62).

4. The electronic device (100) of claim 3, **characterized by** further comprising a circuit board (50) connected to the first connector (51) in the inside (IS), wherein
the conductor member (61) is a shield member which shields electromagnetic waves radiated from electronic components mounted on the circuit board (50), and
one surface (50a) of the circuit board (50) is covered with the shield member, and the other surface (50b) of the circuit board (50) is covered with the frame ground (62).

5. The electronic device (100) of claim 4, **characterized in that**
the communicating aperture (40) is opposed to the shield member from the opposite side of the circuit board (50).

6. The electronic device (100) of any one of claims 1 to 5, **characterized in that**
the mounting part (30) includes a step part (34) including a first step face (341) extending from the outer surface (111) and a second step face (342) extending in a direction intersecting the first step face (341),
the installation component (20) includes a flange part (23) including a third step face (231) opposed to the first step face (341) and fourth step face (232) opposed to the second step face (342), and
the gap (C) includes a gap formed between the first step face (341) and the third step face (231) and between the second step face (342) and the fourth step face (232).

7. The electronic device (100) of claim 6, **characterized in that**
the communicating apertures (40) are formed at a corner part (35) formed between the first step face (341) and the second step face (342).

8. The electronic device (100) of claim 7, **characterized in that**
the communicating apertures (40) are formed in plural numbers along the corner part (35).

9. The electronic device (100) of claim 7 or claim 8, **characterized in that**
the mounting part (30) further includes a sidewall (331) connected to the step part (34), and
the first connector (51) is provided in the sidewall (331).

10. The electronic device (100) of claim 1, **characterized in that**
the installation component (20) further includes a second connector (24) connected to the first connector (51), and
the communicating apertures (40) are positioned on the outer surface (111) side with respect to the second connector (24).
